(19) **Europäisches Patentamt**
**European Patent Office**
**Office européen des brevets**

(11) **EP 2 119 504 B1**

(12) **FASCICULE DE BREVET EUROPEEN**

(45) Date de publication et mention
de la délivrance du brevet:
**29.03.2017 Bulletin 2017/13**

(51) Int Cl.:
***B01L 3/00*** *(2006.01)*

(21) Numéro de dépôt: **09290346.7**

(22) Date de dépôt: **12.05.2009**

(54) **Dispositif et procédé de séparation d'une suspension**

Verfahren und Vorrichtung zur Trennung einer Suspension

Device and method for separating a suspension

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **13.05.2008 FR 0802574**

(43) Date de publication de la demande:
**18.11.2009 Bulletin 2009/47**

(73) Titulaires:
- **Commissariat à l'Énergie Atomique et aux Énergies Alternatives**
  **75015 Paris (FR)**
- **Centre National de la Recherche Scientifique**
  **75016 Paris (FR)**

(72) Inventeurs:
- **Achard, Jean-Luc**
  **38100 Grenoble (FR)**
- **Sollier, Elodie**
  **38000 Grenoble (FR)**
- **Fouillet, Yves**
  **38340 Voreppe (FR)**
- **Rostaing, Hervé**
  **38420 Le Versoud (FR)**

(74) Mandataire: **Gevers & Orès**
**41 avenue de Friedland**
**75008 Paris (FR)**

(56) Documents cités:
- **FAIVRE MAGALIE ET AL: "Geometrical focusing of cells in a microfluidic device: an approach to separate blood plasma" BIORHEOLOGY, ELSEVIER SCIENCE LTD., OXFORD, GB, vol. 43, no. 2, 1 janvier 2006 (2006-01-01), pages 147-159, XP008097626 ISSN: 0006-355X**
- **PARK J ET AL: "Continuous Plasma Separation Form Whole Blood Using Microchannel Geometry" 12 mai 2005 (2005-05-12), MICROTECHNOLOGY IN MEDICINE AND BIOLOGY, 2005. 3RD IEEE/EMBS SPECIAL T OPIC CONFERENCE ON HONOLULU, HI, USA 12-15 MAY 2005, PISCATAWAY, NJ, USA,IEEE, PAGE(S) 8 - 9 , XP010886919 ISBN: 978-0-7803-8711-9 \* page 8, colonne de gauche, alinéa 4 - page 9, colonne de droite, alinéa 3; figure 2 \***

**Description**

L'invention porte sur un dispositif et sur un procédé de séparation d'une suspension, et plus précisément sur un dispositif et un procédé d'extraction d'une phase liquide d'une suspension.

L'invention s'applique en particulier à l'extraction du plasma sanguin.

Le fractionnement sanguin cellules/plasma se fait traditionnellement par centrifugation, dans des systèmes de dimensions macroscopiques. Plus récemment des techniques microfluidiques ont également été développées.

Dans le domaine des microsystèmes, la technique la plus utilisée est la filtration. Des filtres sont placés perpendiculairement à l'écoulement, avec des pores aux dimensions optimisées pour retenir les particules, et récupèrent ainsi une fraction de la phase liquide. La limitation principale de cette technique, dans le cas d'une solution biologique, réside dans la grande déformabilité de certaines cellules (en particulier des globules rouges dans le cas du sang). Les pores se colmatent rapidement, surtout dans le cas d'une solution très concentrée, et les cellules finissent par lyser.

Une autre technique consiste à réaliser une séparation par centrifugation à l'échelle microfluidique, par injection de la suspension dans une conduite en spirale ou en coude. Cependant, les écoulements secondaires (cellules de Dean) qui se développent dans ces conditions tendent à mélanger les particules que l'on souhaite séparer de la fraction liquide. Voir à ce propos l'article de S. Ookawara, D. Street et K. Ogawa, « Numerical study on development of particle concentration profiles in a curved microchannel », Chem. Engineering Science 61 (2006), 3714-3724.

Une des techniques émergentes est l'extraction en zone appauvrie. Cette technique se fonde sur le fait que des particules en suspension injectées dans une conduite droite subissent une migration latérale hétérogène due aux forces de cisaillement ; il apparaît donc une zone sans particules au bord du canal puis un anneau surconcentré entourant la zone centrale où la concentration est homogène.

L'application de cette technique à l'extraction du plasma sanguin est décrite dans l'article de M. Faivre, M. Abkarian, K Bickraj et H Stone « Geometrical focusing of cells in a microfluidic device: an approach to separate blood plasma », Biorheology (2006) 43: 147-159.

La principale limitation de cette technique est qu'une action quelconque exercée sur l'écoulement (pour extraire le plasma par exemple) le perturbe. De plus, le phénomène de zone appauvrie dépend des conditions de l'écoulement (viscosité du liquide, caractéristiques rhéologiques des particules), conditions très variables selon les patients et les pathologies du sang.

Un but de l'invention est de procurer une technique microfluidique de séparation d'une suspension ne présentant pas au moins certains des inconvénients de l'art antérieur.

La technique de l'invention exploite le pouvoir de séparation des vortex de recirculation qui apparaissent lorsque l'écoulement d'un fluide dans une conduite est perturbé par une singularité géométrique. Ces singularités peuvent être des cavités ouvertes sur la conduite, des élargissements brusques, des contractions brusques ou tout obstacle changeant brusquement l'évolution de la section de la conduite. Ces singularités sont placées de façon à être reliées à l'écoulement via la couche appauvrie. Leur rôle est en quelque sorte d'amplifier ponctuellement cette couche.

Le pouvoir séparateur des vortex de recirculation a déjà été mis en évidence dans l'article de J.P. Shelby, D.S.W. Lim, J.S. Kuo et D.T. Chiu « High radial acceleration in microvortices », Nature (2003) 425, et plus récemment dans l'article de D.T. Chiu, « Cellular manipulations in microvortices », Anal Bioanal Chem (2007) 387: 17-20. Ces articles mentionnent la possibilité d'exploiter ce pouvoir séparateur pour trier des particules de densité différente. Cependant, l'extraction de la phase liquide de la suspension n'est pas envisagée.

Par rapport à toutes les techniques classiques de fractionnement, l'extraction du plasma par une exploitation des recirculations couplées à une zone appauvrie dans un système microfluidique est particulièrement avantageuse. En effet :

- L'effet de séparation se produit quelle que soit la particule contenue dans la suspension (rigide ou déformable, sphérique ou ellipsoïdale...), à condition que la densité de la particule soit supérieure à celle du milieu.
- Ce phénomène est robuste par rapport à une éventuelle perturbation de l'écoulement.
- Les mécanismes en jeu sont plus simples à contrôler.
- Ce phénomène permet d'obtenir des zones appauvries en particules aux dimensions importantes, ce qui permet un rendement d'extraction important, surtout s'il est répété le long d'une conduite.

Conformément à l'invention, ces avantages peuvent être obtenus grâce à un dispositif d'extraction d'une phase liquide d'une suspension, comportant : une conduite principale de circulation de ladite suspension de longueur suffisante pour permettre le développement d'une couche de ladite suspension appauvrie en phase solide ; au moins un moyen de perturbation de l'écoulement prévu dans la conduite principale et adapté pour provoquer la formation d'au moins un tourbillon de recirculation augmentant localement l'épaisseur de ladite couche appauvrie, ledit au moins un moyen de perturbation de l'écoulement formant une singularité géométrique; un moyen d'injection d'une suspension dans la conduite principale à un débit adapté pour provoquer la formation d'au moins un tourbillon de recirculation au niveau de ladite singularité ; et au moins un moyen de prélèvement de liquide, disposé au niveau d'une région du dispositif où ladite suspension se trouve enrichie en phase liquide du fait dudit tourbillon de recirculation.

Selon des modes de réalisation particuliers de l'invention :

- Ledit moyen de prélèvement de liquide peut être agencé de manière à prélever une fraction enrichie en phase liquide de ladite suspension au niveau d'une région centrale dudit tourbillon. En variante, il peut être agencé de manière à prélever une fraction enrichie en phase liquide de ladite suspension à l'extérieur dudit tourbillon ou au niveau d'une région périphérique de ce dernier.
- Ledit moyen de prélèvement de liquide peut être agencé de manière à prélever ladite fraction enrichie en phase liquide dans une direction perpendiculaire au plan du tourbillon. En variante, il peut être agencé de manière à prélever ladite fraction enrichie en phase liquide dans une direction gisant dans le plan du tourbillon et orientée vers l'arrière par rapport au sens de l'écoulement de la suspension dans la conduite principale.
- Ledit moyen de perturbation de l'écoulement de ladite suspension peut être choisi parmi : un élargissement brusque de ladite conduite principale ; une cavité ouverte dans une paroi latérale de ladite conduite principale ; et un obstacle non profilé placé dans la lumière de ladite conduite principale.
- Ladite conduite peut être en spirale ou présenter un coude ou courbure, et dans laquelle ledit moyen de perturbation de l'écoulement peut être une cavité ouverte au niveau d'une paroi latérale de ladite conduite principale et disposée du côté extérieur de la courbure.
- Un rétrécissement de ladite conduite principale peut être prévu en amont dudit moyen de perturbation de l'écoulement afin d'augmenter l'épaisseur de ladite couche appauvrie en phase solide.
- Ledit moyen de prélèvement de liquide peut comporter une conduite secondaire pour effectuer un prélèvement en continu d'une fraction enrichie en phase liquide de ladite suspension. En particulier, ledit moyen de prélèvement de liquide est adapté pour extraire une fraction enrichie en phase liquide de ladite suspension à travers ladite conduite secondaire par aspiration à l'aide d'une micropompe, dont le fonctionnement peut être fondé sur différents principes physiques, et en particulier un effet de capillarité ou électrocapillarité, un effet électrohydrodynamique ou magnétohydrodynamique ou un gradient de température. Avantageusement, un filtre peut être prévu à l'entrée de ladite conduite secondaire.
- En variante, le dispositif peut comporter au moins une cavité, qui peut être avantageusement hydrophile, pour effectuer un prélèvement discontinu d'une fraction enrichie en phase liquide de ladite suspension.

- Des moyens peuvent être prévus pour activer et désactiver sur commande le prélèvement de liquide.
- Des moyens de prélèvement de liquide peuvent être agencés symétriquement de part et d'autre de ladite conduite principale.
- Un tel dispositif peut comporter une pluralité de moyens de perturbation de l'écoulement de la suspension disposés le long de la conduite ; et une pluralité de moyens de prélèvement de liquide associés auxdits moyens de perturbation de l'écoulement. Le dispositif peut comporter également des moyens pour provoquer un mélange de ladite suspension, intercalés entre les différents moyens de perturbation de l'écoulement.
- Un tel dispositif peut comporter une pluralité de dispositifs élémentaires reliés en série, de telle manière que le liquide extrait par l'un desdits dispositifs est injecté en entrée d'un dispositif adjacent.
- Ladite conduite principale peut être de type microfluidique et présenter des dimensions transversales comprises entre 10 $\mu$m et 10 mm.
- Un tel dispositif microfluidique présente avantageusement une géométrie de type planaire.

Un autre objet de l'invention est un procédé d'extraction d'une phase liquide d'une suspension, comportant : l'injection de ladite suspension dans un dispositif tel que décrit ci-dessus, à un débit adapté pour provoquer, en aval de ladite ou de chaque singularité, la formation d'au moins un tourbillon de recirculation augmentant localement l'épaisseur d'une couche de ladite suspension appauvrie en phase solide ; et le prélèvement d'une fraction de ladite suspension enrichie en liquide du fait dudit ou desdits tourbillons de recirculation.

D'autres caractéristiques, détails et avantages de l'invention ressortiront à la lecture de la description faite en référence aux dessins annexés donnés à titre d'exemple, dans lesquels :

- La figure 1 illustre la migration latérale des particules d'une suspension et l'effet de surconcentration de celles-ci dans un anneau autour de l'axe longitudinal d'une conduite rectiligne.
- la figure 2 illustre le principe à la base de l'invention ;
- les figures 3 à 7 montrent différentes singularités d'un écoulement pouvant être utilisées pour la mise en oeuvre de l'invention ;
- les figures 7a, 7b, 7c et 8 illustrent les mécanismes par lesquels un rétrécissement de la conduite principale ou une courbure, respectivement, peuvent assister la séparation d'une suspension ;
- les figures 9 à 13 représentent des dispositifs complexes constitués par une pluralité de dispositifs élémentaires reliés entre eux en parallèle (figures 9 à 11 et 13) ou en série (figure 12) ;
- les figures 14A - 14E représentent un dispositif non-conforme à l'invention et quatre dispositifs selon différents modes de réalisation de l'invention, respectivement ; et

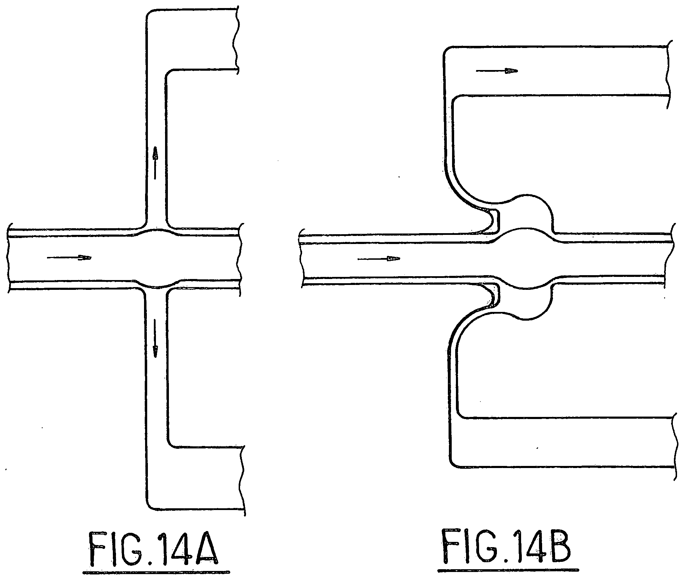

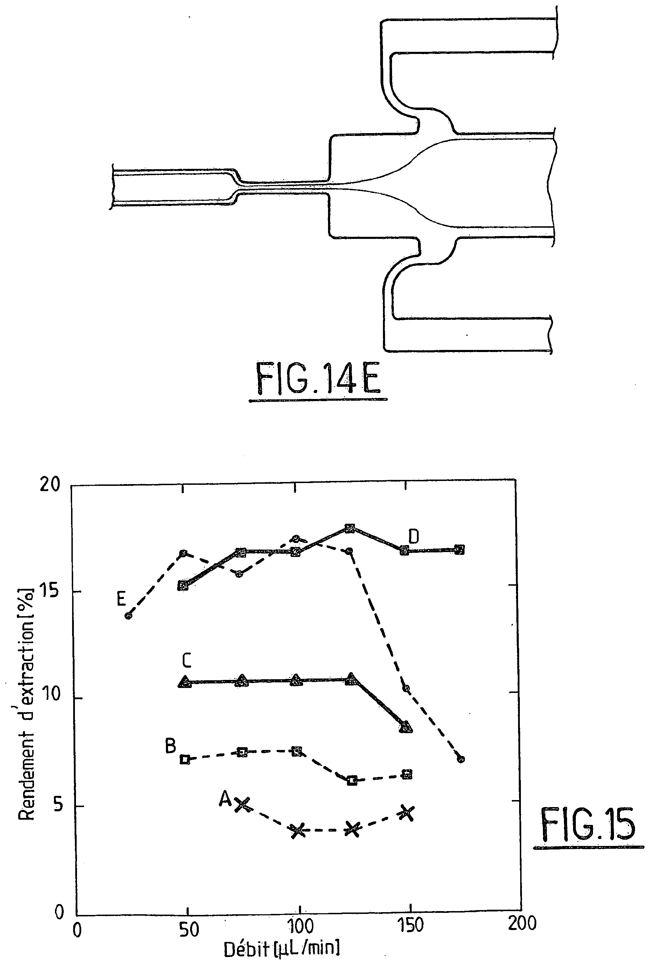

- la courbe de la figure 15 illustre la dépendance du rendement d'extraction du débit pour les dispositifs des figures 14A - E.

Le phénomène de recirculation est bien connu en mécanique des fluides. Il apparaît dans des singularités géométriques qui affectent des canaux, des tubes, des capillaires etc., réunis sous le terme générique de conduite, dans lesquels circule un fluide. Les singularités peuvent être, en particulier, des cavités ouvertes sur la conduite, des élargissements brusques, des contractions brusques ou alors des obstacles internes à la conduite.

Lors de l'injection d'une suspension de particules, ce phénomène se manifeste par l'apparition d'un tourbillon principal (associé le cas échéant à des tourbillons marginaux beaucoup plus petits). Celui-ci occupe la majeure partie de l'étendue de la singularité. Son entraînement se fait via une interface fluide qui le sépare de l'écoulement axial dans la conduite. Chaque particule ou cellule (qui doit être plus lourde que le liquide environnant) localisée dans le tourbillon principal est soumise à deux forces antagonistes : une force centrifuge qui tend à l'éloigner du centre du tourbillon et une force de portance qui l'éloigne de la paroi. Pour une particule dont la masse M=pV (p est la masse volumique, V est le volume) est suffisamment importante, la force centrifuge prédomine sur la force de portance, qui dépend de la seule taille et proportionnelle à $V^{1/3}$ de la particule ce qui lui permet de traverser l'interface fluide d'entraînement et donc de ne plus être piégée dans le tourbillon ; elle est alors éjectée. Les autres particules se retrouvent bloquées dans un anneau centré sur l'axe du tourbillon, laissant ainsi une zone appauvrie au centre du tourbillon et auprès de la paroi. Il est donc envisageable de réaliser un tri sanguin entre petites cellules légères et grandes cellules plus lourdes. Pour exemple, un globule rouge a un diamètre moyen de $7 \mu m$ pour une masse volumique de 1,098 tandis qu'un globule blanc a un diamètre de 9 à $15 \mu m$ pour une masse volumique de 1,06 à 1,09.

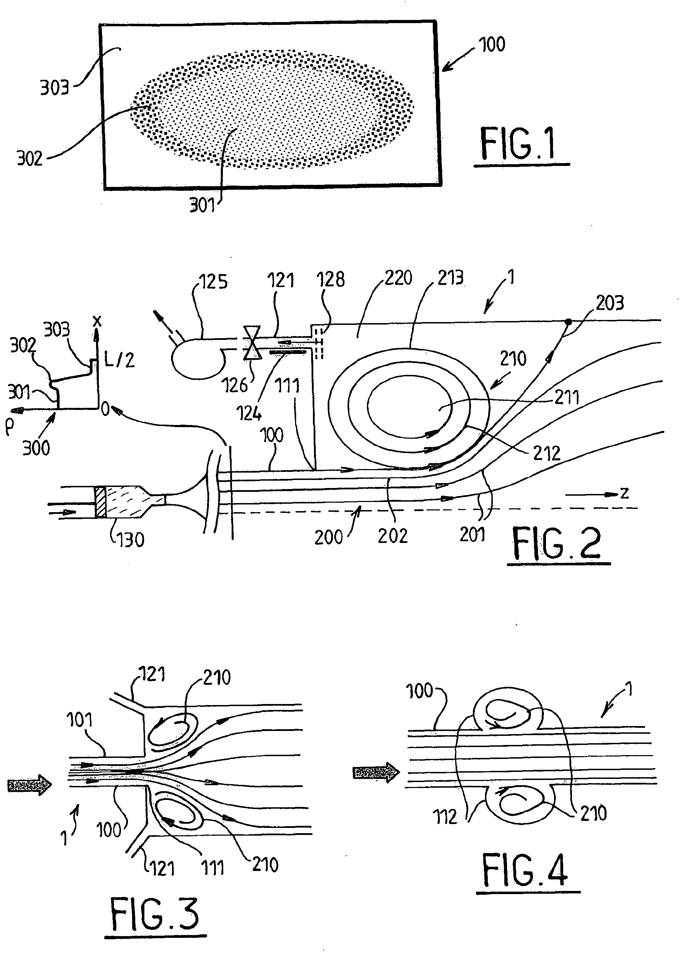

Il est connu de l'art antérieur que, lorsque du sang s'écoule dans une conduite rectiligne, les globules rouges, cellules ellipsoïdes et déformables, subissent une force de portance qui tend à les éloigner de la paroi. La figure 1 montre qu'au bout d'une certaine longueur d'écoulement, le profil de distribution des globules dans une conduite rectiligne 100 de section rectangulaire comporte : une zone 303 sans particules près des parois ; un anneau 302 centré sur l'axe longitudinal de la conduite, dans lequel s'observe une surconcentration de globules ; et une zone centrale 301 où la concentration en globule est relativement homogène et sensiblement plus faible que dans l'anneau 302.

La surconcentration de globules dans l'anneau 302, initialement nulle, croit avec la longueur d'écoulement, jusqu'à se stabiliser après une distance limite, dont la valeur dépend des caractéristiques de la suspension (notamment, de sa concentration en particules et de la déformabilité de ces dernières) et de l'écoulement. Typiquement, la distance limite est de l'ordre de 1 à 50 mm dans le cas d'une conduite de type microfluidique.

La figure 2 représente une vue partielle en section d'un dispositif 1 selon l'invention. Un tel dispositif comporte une conduite 100 dans laquelle une suspension de particules 200, injectée à l'aide d'une seringue 130, s'écoule le long d'une direction longitudinale z. Le graphique 300, sur la gauche, montre le profil de la distribution des particules dans la direction transversale x ; comme cela a été expliqué plus haut, la concentration p de particules a une valeur approximativement constante dans la région centrale 301 de l'écoulement et prend une valeur très faible dans une zone 303 près de la paroi de la conduite, pour s'annuler au contact de ladite paroi (x=U2, L étant la largeur de la conduite). Les régions 301 et 303 sont séparées par une couche 302 dans laquelle la concentration de particules atteint un pic.

La forme de la section transversale de la conduite 100 est généralement indifférente : elle peut par exemple être carrée, rectangulaire ou même circulaire, bien que ce dernier mode de fabrication soit plus délicat à mettre en oeuvre.. Le dispositif est de type microfluidique, donc les dimensions transversales de la conduite sont approximativement comprises entre 10 $\mu m$ et 10 mm. Le dispositif dans son ensemble peut avoir des dimensions de l'ordre de quelques centimètres carrés.

Dans l'exemple de la figure 2, la conduite 100 présente un élargissement brusque 111, de préférence d'un facteur 2 à 8 en largeur, qui provoque la formation d'un vortex de recirculation ou tourbillon 210. On remarque trois catégories de lignes de flux. Il y a tout d'abord les lignes de flux 201, associées aux régions 301 et 302 de l'écoulement plus riches en particules, qui s'épanouissent de façon régulière en passant de la zone à faible à la zone à forte section. Il y a ensuite les lignes de flux 212 refermées sur elles-mêmes dans la zone de recirculation 210. Séparant les deux précédentes zones, il y a les lignes de flux 202, issues de la couche pariétale appauvrie 303. Une de ces lignes borde l'anneau surconcentré. Une autre de ces lignes 203, issue de l'arête de l'élargissement brusque 111, borde la zone de recirculation 210.

Le débit d'injection de la suspension doit être suffisant pour permettre la formation des vortex de recirculation. Par exemple, dans le cas du sang avec une conduite ayant une largeur de quelques centaines de micromètres, ces vortex apparaissent à partir de débits de l'ordre de 100 $\mu$l/min. L'injection de la suspension peut se faire au moyen d'un pousse-seringue, comme dans le cas de la figure, ou de toute pompe adaptée.

Comme expliqué plus haut, les particules plus denses que le liquide se concentrent en un anneau 212 du tourbillon. Le centre 211 du vortex, sa périphérie 213 et la zone extérieure 220 sont particulièrement enrichies en liquide et appauvrie en particules. Un moyen de prélèvement, généralement sous la forme d'une conduite secondaire, peut donc être prévu dans l'une de ces zones pour extraire une fraction de la suspension sensiblement enrichie en phase liquide. Dans le cas de la figure 2, ce moyen de prélèvement est un canal 121 orienté dans une direction sensiblement opposée au sens de circulation de la suspension dans la conduite principale 100.

L'extraction de la phase enrichie en liquide est un élément critique de la technique de l'invention. Il est très important qu'elle ne déstabilise ou atténue la recirculation : par exemple, un pompage trop fort pourrait plaquer l'écoulement à la paroi et faire disparaître le vortex. Pour cela, il est possible de contrôler le débit d'extraction au moyen d'un pousse-seringue ou un contrôleur de pression, et/ou dimensionner les conduites d'extraction de manière à assurer qu'elles présentent une résistance fluidique suffisamment élevée.

Typiquement, le débit d'extraction doit être de l'ordre de quelques nl/min à quelques $\mu$L/min. En tout cas, le débit le plus adapté à chaque géométrie doit être estimé expérimentalement ou par simulation, afin de ne pas perturber l'écoulement mais de permettre néanmoins un rendement d'extraction suffisant.

Pour que l'extraction ne perturbe pas l'écoulement, en outre, il est préférable que la conduite d'extraction soit fine et longue, de manière à présenter une résistance fluidique plus élevée que celle de la conduite principale. Les dimensions exactes doivent être définies expérimentalement ou par simulation, suivant la géométrie utilisée.

La conduite secondaire de prélèvement peut être disposée essentiellement à deux endroits : à l'extérieur (ou dans une région périphérique) du vortex, comme représenté sur la figure 2, ou au centre de ce dernier. L'extraction à partir du centre du tourbillon est particulièrement avantageuse, car c'est l'endroit où la séparation est la plus complète.

La conduite secondaire peut être sensiblement parallèle au plan du vortex, et de préférence orientée vers l'arrière par rapport au sens de l'écoulement de la suspension dans la conduite principale. C'est la solution représentée sur la figure 2, et qui s'avère être la plus avantageuse lorsque le prélèvement du liquide est effectué à la périphérie du vortex.

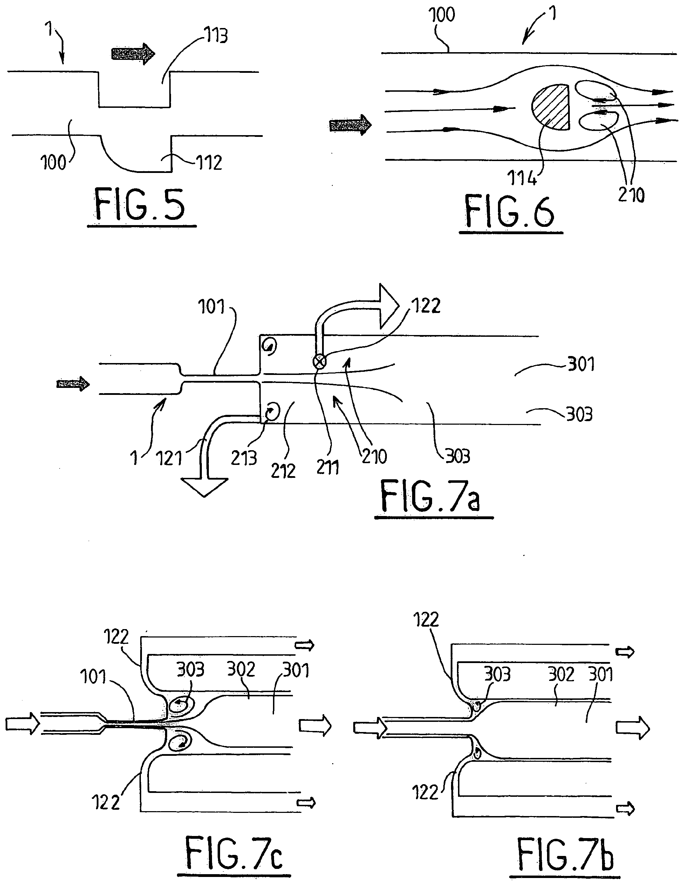

En variante, la conduite secondaire (122 sur la figure 7a) peut être disposée perpendiculairement au plan du vortex. On comprend que cette solution alternative permet de minimiser la perturbation de l'écoulement lorsque le liquide est extrait à partir du centre de ce dernier. Selon un mode de réalisation préférentiel de l'invention, le dispositif est réalisé en technologie planaire, par gravure d'un substrat ou par moulage ; dans ce cas, la conduite orientée perpendiculairement au vortex prend la forme d'un puits orthogonal au plan du dispositif.

- L'extraction du liquide à travers la conduite secondaire 121 ou 122 peut se faire à l'aide d'une pompe 125, et de préférence une micropompe exploitant une différence de pression entre la conduite principale et celle d'extraction, résulte d'un apport d'énergie qui peut se faire sous diverses formes. Ainsi, la micropompe peut utiliser une différence de température, une différence de potentiel électrique ou bien un champ magnétique, sans que cette liste ne soit exhaustive.

- Une extraction hydrodynamique est également possible. Un contrôle précis des pertes de charge est alors nécessaire afin de trouver le bon équilibre entre l'injection et l'extraction, pour ne pas déstabiliser le tourbillon.

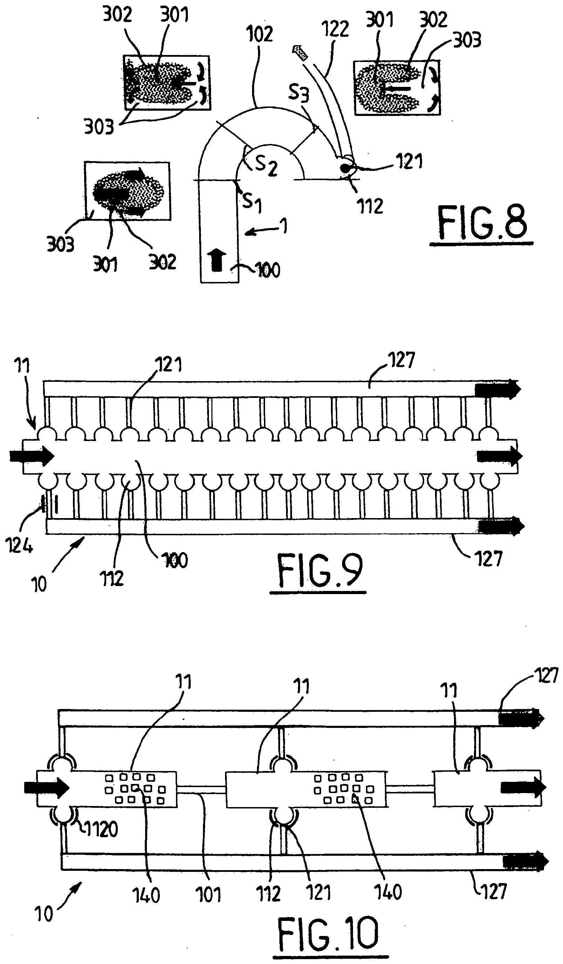

- L'extraction peut également se faire en régime discontinu, en exploitant des cavités. Celles-ci peuvent être hydrophiles. Conformément à ce mode de réalisation, la phase liquide extraite est maintenue dans les cavités jusqu'à une étape contrôlée de largage. Par exemple, la figure 10 montre des cavités 112 sur le fond desquelles sont disposées des électrodes 1120. L'activation des électrodes préalablement au lancement de l'écoulement d'extraction rend les cavités hydrophiles et leur permet de retenir la phase liquide. La désactivation des électrodes permet le largage de ladite phase liquide. Ce largage peut être facilité en prévoyant des électrodes également au niveau des conduites d'extraction 127.

En général il est opportun de ne démarrer l'extraction qu'après que l'écoulement dans le dispositif se soit stabilisé. A cet effet on peut prévoir des vannes 126 pour ouvrir et fermer sélectivement la conduite secondaire. Les vannes peuvent être actionnées par un système pneumatique ; elles peuvent également être hydrophobes et activables à partir d'un certain niveau de pression. Lorsque l'extraction se fait par électrocapillarité, des électrodes 124 modifient l'hydrophilie / hydrophobicité de la conduite, de manière à permettre ou à empêcher le prélèvement de liquide. De même, en cas d'extraction discontinue, l'hydrophilie des cavités peut être commandée électriquement.

Comme le montre la figure 3, de préférence l'élargissement 111 de la conduite principale est symétrique par rapport à un axe longitudinal de cette dernière ; ainsi, deux vortex de recirculation peuvent être exploités pour la séparation de la suspension. Cela permet de doubler le débit d'extraction de la phase liquide, sans avoir à augmenter le débit de pompage à travers chaque conduite secondaire, ce qui pourrait perturber les tourbillons 210.

Dans les exemples des figures 2 et 3, un élargissement de la conduite principale a été utilisé pour perturber l'écoulement de la suspension et provoquer un vortex de recirculation. En variante, d'autres moyens de perturbation de l'écoulement peuvent être utilisés :

- une cavité 112 ouverte dans une paroi latérale de la conduite principale, ou préférablement deux cavités disposées symétriquement l'une en face de l'autre (figure 4) ;
- une cavité 112 ouverte dans une paroi latérale de la conduite principale, en regard de laquelle est agencée une protubérance 113 faisant saillie de la paroi opposée (figure 5) ; ou
- un obstacle non profilé 114 placé dans la lumière de la conduite principal (figure 6).

Lorsque des cavités 112 sont utilisées, leurs dimensions (leur diamètre dans le cas de cavités approximativement circulaires) doivent être déterminées de manière à ne pas perturber excessivement l'écoulement dans la conduite principale. Typiquement, ces dimensions seront comprises entre quelques micromètres et quelques millimètres.

Notamment dans le cas où la suspension à séparer est une suspension biologique telle que le sang, il faut veiller à ne pas endommager les cellules (en particulier les globules rouges dans le cas du sang). Ainsi, les cavités 112 ou l'obstacle 114 ne présenteront pas, de préférence, d'arêtes vives.

Il peut être avantageux de modifier le profil de l'écoulement en amont par rapport aux vortex de recirculation afin d'accentuer le pouvoir séparateur de ces derniers. Par exemple, une restriction géométrique 101 de la conduite principale provoque un élargissement de la couche latérale de l'écoulement appauvrie en particules (303). Ainsi, moins de particules se détacheront du flux principal pour rejoindre le tourbillon. Cet effet est illustré par la figure 7a, qui montre également comme le prélèvement de la phase enrichie en liquide peut s'effectuer aussi bien à partir de la périphérie des vortex que de leurs centres (conduites secondaires 121 et 122).

La comparaison des figures 7b et 7c permet de mettre en évidence l'avantage apporté par l'introduction d'une restriction de la conduite principale. Le taux d'extraction du plasma est de 9% dans le cas de la figure 7b et de 19% dans celui de la figure 7c.

Ces trois exemples se rapportent à des injections de sang humain dilué au 1/20 avec du tampon phosphate salin

Pour être efficace et augmenter de façon notable la couche appauvrie en particules, la restriction géométrique doit être la plus fine et la plus longue possible. Des largeurs inférieures à 20 $\mu$m sont cependant à éviter car les cellules deviennent confinées, se déforment et peuvent être perturbées (lyse, modification transcriptome...). Pour des largeurs supérieures à 100 $\mu$m, on n'observe pas d'effet significatif. La longueur de la restriction sera typiquement comprise entre 50 $\mu$m et 1 mm.

Si le vortex de recirculation est provoqué par une cavité en aval, cette dernière doit être placée à une distance suffisante de la restriction (typiquement au moins 200 $\mu$m) pour que la couche appauvrie soit stabilisée.

Ce couplage des effets de restriction et recirculation peut-être avantageusement exploité pour un tri particules légères / particules lourdes, en particulier globules blancs / globules rouges.

Comme les globules blancs sont non déformables, ils se repartissent dans toute la section de la conduite ; dans les régions de l'écoulement (anneau + zone centrale) où se concentrent les globules rouges mais aussi dans la couche appauvrie en globules rouges. Après passage dans la restriction, la couche appauvrie (en globules rouges) s'est élargie par rapport à celle qui se manifestait avant la restriction. Les globules blancs, de par leur non déformabilité, ignorent la réduction de l'anneau de surconcentration et se trouvent donc en plus grand nombre dans la nouvelle couche appauvrie.

Le passage dans les recirculations (en coin ou en cavité) va donc permettre de collecter un plasma plus riche en globules blancs et de les y maintenir, tout en excluant les globules rouges qui s'y aventureraient, en jouant à la fois sur les débits en jeu et les propriétés géométriques des singularités. Le prélèvement de ce plasma riche en globules blancs ouvre la possibilité d'une séparation ultérieure des globules blancs dans des dispositifs prévus à cet effet. On peut également envisager, une fois le plasma riche en globules blancs collecté dans les recirculations, d'exclure également les globules blancs, encore une fois par un contrôle précis des débits et géométries.

Une courbure de la conduite principale 100 peut également assister la séparation de la suspension. En effet il est connu (voir l'article précité de S. Ookawara et al.) que lorsqu'un fluide circule dans un canal courbe, des écoulements secondaires dits « cellules de Dean » se développent dans un plan transversal par rapport à la direction de l'écoulement. Lorsque ce fluide est une suspension, ces écoulements secondaires ont tendance à éloigner les particules de la paroi située du côté extérieur de la courbure. Cet effet est visible sur la figure 8, dans les encadres représentant des coupes transversales de la conduite 100 au niveau des sections S1, S2 et S3. Dans ces conditions, il est avantageux de prévoir une cavité latérale 112 (ou un élargissement asymétrique de la conduite) en aval de la courbure et du côté extérieur de cette dernière, afin de provoquer un vortex de recirculation dans une région de l'écoulement déjà appauvrie en particules.

Le développement des écoulements secondaires peut être caractérisé par un nombre adimensionnel dit nombre de Dean et défini par $D_e = R_e^c \sqrt{\dfrac{D_h}{2 R_c}}$ où $R_e^c$ est le nombre de Reynolds d'une conduite $R_e^c = \dfrac{w_c D_h}{\nu}$, $w_c$ étant la vitesse axiale moyenne de l'écoulement, $D_h$ le diamètre hydraulique de la conduite, $R_c$ son rayon de courbure et $\nu$ la viscosité cinématique de la suspension. En général, un nombre de Dean compris entre 1 et 100, et de préférence entre 10 et 50, s'avère adéquat.

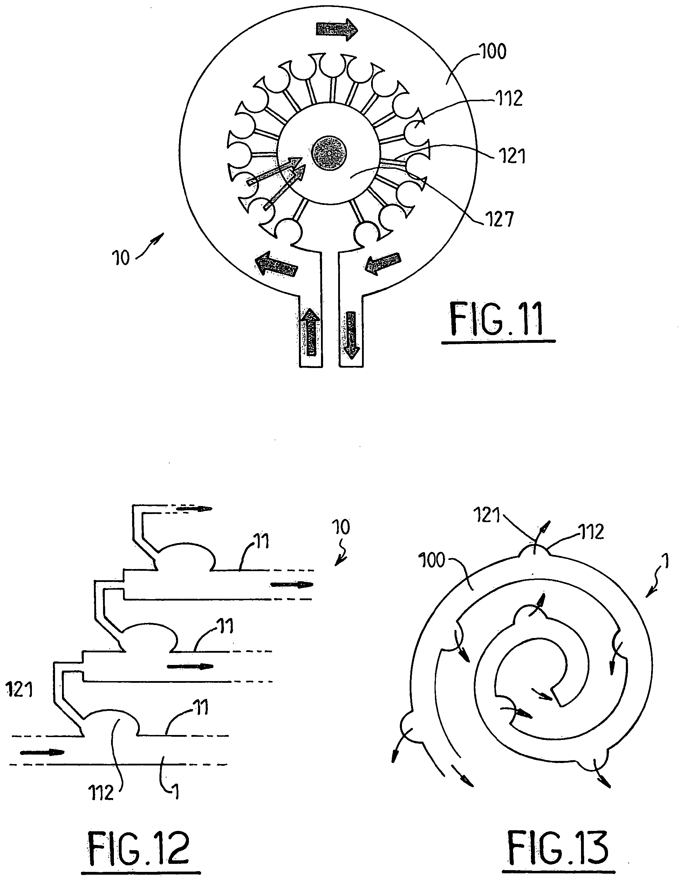

Il est également possible d'envisager une conduite principale 100 enroulée en spirale, avec plusieurs cavités d'extraction disposées sur toute sa longueur (Figure 13).

Comme cela a été mentionné plus haut, afin de ne pas perturber les vortex de recirculation, le prélèvement de la fraction enrichie en phase liquide de la suspension doit se faire à un débit modéré. Pour atteindre un débit de séparation important, il est donc opportun d'utiliser des dispositifs complexes 10, constitués par une pluralité de dispositifs élémentaires 11 reliés en parallèle. Les figures 9 à 11 et 13 montrent quatre exemples de tels dispositifs complexes.

Le dispositif de la figure 9 est constitué par une conduite principale 100 de part et d'autre de laquelle sont disposées des cavités de recirculation 112, reliées par l'intermédiaire de conduites secondaires 120 à des conduites communes d'évacuation de liquide 127.

La figure 10 montre une variante d'un tel dispositif, où :

- un rétrécissement localisé 101 de la conduite principale, suivi par un rélargissement, est prévu en amont de chaque couple de cavités 112, afin de bénéficier de l'effet d'appauvrissement en particules discuté plus haut en référence aux figures 7a - 7c ; et

- un moyen (un ensemble 140 de piliers) est prévu en aval de chaque couple de cavités pour mélanger et homogénéiser la suspension.

Le dispositif de la figure 11 est essentiellement une variante compacte de celui de la figure 9. Dans ce dispositif, la conduite principale 100 est enroulée en cercle, les cavités de recirculation 112 sont prévues du seul côté interne de cette conduite et la conduite commune d'évacuation du liquide 127 se trouve en position centrale. Il aurait également été possible de prévoir les cavités 112 du seul côté extérieur de la conduite 100 afin de profiter de l'assistance à la séparation fournie par les cellules de Dean.

Dans les figures 9 à 11 et 13, les conduites secondaires d'extraction sont agencées en position centrale par rapport aux cavités de recirculation correspondantes. En réalité, il serait préférable qu'elles soient disposées de manière à permettre un prélèvement de liquide vers l'arrière par rapport à la direction de l'écoulement dans la conduite principale (voir la figure 8, par exemple).

Dans le dispositif de la figure 12, plusieurs dispositifs élémentaires 11 sont reliés «en série ». Cela signifie que la suspension enrichie en phase liquide extraite par un premier dispositif élémentaire est injectée dans la conduite principale d'un deuxième dispositif et ainsi de suite. Cet agencement permet de purifier le liquide extrait jusqu'au niveau souhaité.

Alternativement, il est possible de procéder par bouclage, c'est à dire collecter le liquide extrait et le réinjecter dans le dispositif pour une phase ultérieure de purification.

Quelle que soit la technique utilisée, la qualité de l'extraction peut être sensiblement améliorée en prévoyant des filtres à l'entrée de conduites secondaires de prélèvement. L'appauvrissement en particules opéré par le vortex de recirculation empêche le bouchage des filtres qui se produit dans les systèmes filtrants de l'art antérieur.

Des filtres peuvent également être utilisés en vue de compenser le démarrage, c'est-à-dire pour filtrer la suspension dans l'attente de la stabilisation des vortex de recirculation. Ces filtres devraient avoir la capacité d'absorber un certain nombre de particules (par exemple, quelques millions) sans se boucher ni modifier notablement la résistance fluidique du canal.

Les figures 14A - E et 15 permettent de comparer les performances de dispositifs selon différents modes de réalisation de l'invention. Dans les exemples des figures 14A - E les conduites sont de section parallélépipédique de profondeur (ou épaisseur) 100 $\mu$m. La largeur de la conduite principale est de 200 $\mu$m, celle des conduites d'extraction est de 50 $\mu$m. Le fluide circulant dans tous les dispositifs est du sang total dilué d'un facteur 20 dans le PBS (tampon phosphate salin). On peut distinguer facilement le sang entier (en gris foncé) du plasma extrait (en gris clair).

Les courbes A - E sur le graphique de la figure 15 montrent les rendements d'extraction des dispositifs des figures 14A - 14E (en pourcentage) en fonction du débit en $\mu$L/min.

Le dispositif de la figure 14A ne comporte pas de singularité, et n'induit donc pas la formation de vortex de recirculation. La séparation du plasma se base uniquement sur l'existence d'une couche appauvrie en cellules sanguines à la périphérie de la conduite. Le rendement d'extraction est faible (inférieur à 5%) et dépend peu du débit.

Dans le dispositif de la figure 14B des vortex de recirculation sont induit par des singularités géométriques en forme d' « oreilles », disposées symétriquement par rapport à la conduite principale et ayant un rayon de courbure de 100 $\mu$m. Le rendement est d'environ 7,4%, soit une augmentation d'environ 50% par rapport à la configuration A.

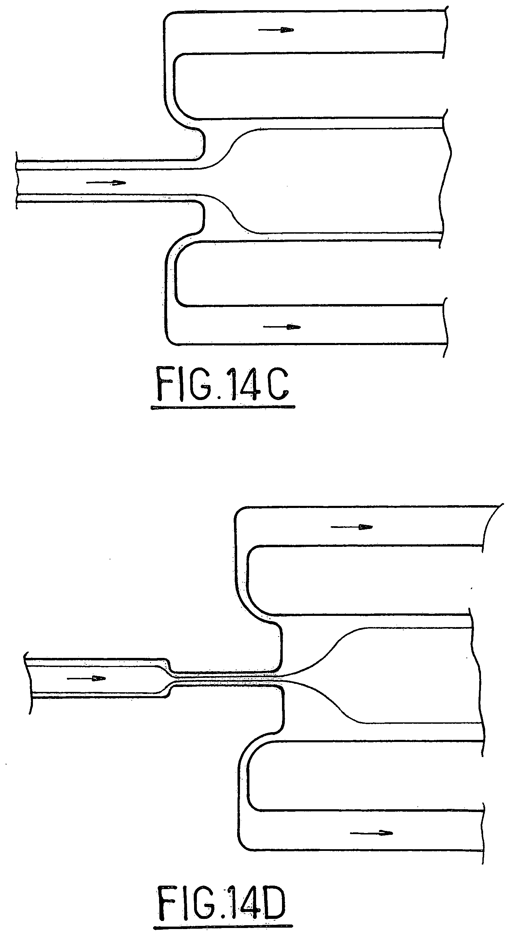

Dans le dispositif de la figure 14C, la singularité géométrique à l'origine des vortex de recirculation est un élargissement brusque de la conduite principale, de 200 $\mu$m à 600 $\mu$m. Le rendement d'extraction est supérieur à 10%, mais décroit pour des débits supérieurs à 100 $\mu$L/min.

Dans le dispositif de la figure 14D, l'élargissement est précédé par un rétrécissement (largeur : 50 $\mu$m ; longueur : 500 $\mu$m). Les conduites d'extraction sont disposées au niveau de l'élargissement, orientées à contre-courant. Le rendement d'extraction est supérieur à 15% (soit une amélioration d'un facteur 3 par rapport au cas A) et dépend peu du débit.

Le dispositif de la figure 14E se différencie du précédent seulement par le positionnement des conduites d'extraction, qui sont disposées plus en aval. Le rendement d'extraction est sensiblement égal à celui du dispositif 14D pour des bas débits, mais s'écroule au-delà de 100 μL/min.

Un dispositif selon l'invention a avantageusement une structure planaire. Sa fabrication peut se faire par différentes techniques.

Un premier mode de fabrication est basé sur des techniques de gravure issues de la microélectronique. Conformément à cette méthode, on commence par recouvrir un substrat recouvert d'un dépôt d'oxyde de silicium, puis d'une couche de résine photosensible. Cette résine est insolée à travers le masque comprenant les motifs voulus. L'oxyde de silicium est gravé à travers la couche de résine restante. Puis cette résine est enlevée et une gravure plasma ou chimique permet d'avoir une profondeur de 10 à quelques centaines de μm. Puis la puce est capotée par scellement anodique et connectée avec la connectique adaptée (biocompatible si nécessaire).

Un autre mode de fabrication possible est basé sur la technologie PDMS (polydimethylsiloxane). Ce procédé est plus facile et plus rapide à mettre en oeuvre. Par contre il est moins précis et les dimensions autorisées sont plus élevées. Conformément à ce mode de fabrication, un moule est tout d'abord fabriqué avec des motifs en résine ordyl sur un support de silicium ou de verre. Le polymère est ensuite versé sur ce support puis réticulé et démoulé. Le dispositif est enfin capoté et connecté avec la connectique adaptée.

## Revendications

1. Dispositif (1) d'extraction d'une phase liquide d'une suspension (200), **caractérisé en ce qu'**il comporte :

   - une conduite principale (100) de circulation de ladite suspension, de longueur suffisante pour permettre le développement d'une couche de ladite suspension appauvrie en phase solide ;
   - au moins un moyen (111, 112, 113, 114) de perturbation de l'écoulement de ladite suspension, prévu dans la conduite principale et adapté pour provoquer la formation d'au moins un tourbillon de recirculation augmentant localement l'épaisseur de ladite couche appauvrie (210), ledit au moins un moyen de perturbation de l'écoulement formant une singularité géométrique ;
   - un moyen d'injection (130) d'une suspension dans la conduite principale à un débit adapté pour provoquer la formation d'au moins un tourbillon de recirculation au niveau de ladite singularité ; et
   - au moins un moyen de prélèvement de liquide (121, 122), disposé au niveau d'une région du dispositif (211, 213, 220) où ladite suspension se trouve enrichie en phase liquide du fait dudit tourbillon de recirculation.

2. Dispositif selon la revendication 1, dans lequel ledit moyen de prélèvement (122) de liquide est agencé de manière à prélever une fraction enrichie en phase liquide de ladite suspension au niveau d'une région centrale (211) dudit tourbillon (210).

3. Dispositif selon la revendication 1, dans lequel ledit moyen de prélèvement de liquide (121) est agencé de manière à prélever une fraction enrichie en phase liquide de ladite suspension à l'extérieur (220) dudit tourbillon ou au niveau d'une région périphérique (213) de ce dernier.

4. Dispositif selon l'une des revendications précédentes, dans lequel ledit moyen de prélèvement de liquide (122) est agencé de manière à prélever ladite fraction enrichie en phase liquide dans une direction perpendiculaire au plan du tourbillon.

5. Dispositif selon l'une des revendications 1 à 3, dans lequel ledit moyen de prélèvement (121) est agencé de manière à prélever ladite fraction enrichie en phase liquide dans une direction gisant dans le plan du tourbillon et orientée vers l'arrière par rapport au sens de l'écoulement de la suspension dans la conduite principale.

6. Dispositif selon l'une des revendications précédentes, dans lequel ledit moyen de perturbation de l'écoulement de ladite suspension est choisi parmi :

   - un élargissement brusque (111) de ladite conduite principale ;
   - une cavité (112) ouverte dans une paroi latérale de ladite conduite principale ; et
   - un obstacle non profilé (114) placé dans la lumière de ladite conduite principale.

7. Dispositif selon la revendication 6, dans lequel ladite conduite est en spirale ou présente un coude ou courbure (102), et dans lequel ledit moyen de perturbation de l'écoulement est une cavité (112) ouverte au niveau d'une paroi latérale de ladite conduite principale et disposée du côté extérieur de la courbure.

8. Dispositif selon l'une des revendications précédentes, dans lequel un rétrécissement (101) de ladite conduite principale est prévu en amont dudit moyen de perturbation de l'écoulement afin d'augmenter l'épaisseur de ladite couche appauvrie en phase solide.

9. Dispositif selon l'une des revendications précédentes, dans lequel ledit moyen de prélèvement de liquide comporte une conduite secondaire (121, 122) pour effectuer un prélèvement en continu d'une fraction enrichie en phase liquide de ladite suspension.

**10.** Dispositif selon la revendication 9, dans lequel ledit moyen de prélèvement de liquide est adapté pour extraire une fraction enrichie en phase liquide de ladite suspension à travers ladite conduite secondaire par aspiration à l'aide d'une micropompe.

**11.** Dispositif selon l'une des revendications 9 ou 10, dans lequel un filtre (128) est prévu à l'entrée de ladite conduite secondaire.

**12.** Dispositif selon l'une des revendications 1 à 8, dans lequel ledit moyen de prélèvement de liquide comporte au moins une cavité (112) hydrophile, pour effectuer un prélèvement discontinu d'une fraction enrichie en phase liquide de ladite suspension.

**13.** Dispositif selon l'une des revendications précédentes, dans lequel des moyens (124, 126) sont prévus pour activer et désactiver sur commande le prélèvement de liquide.

**14.** Dispositif selon l'une des revendications précédentes, dans lequel des moyens de prélèvement de liquide (121) sont agencés symétriquement de part et d'autre de ladite conduite principale.

**15.** Dispositif selon l'une des revendications précédentes, comportant :

- une pluralité de moyens de perturbation (112) de l'écoulement de la suspension disposés le long de la conduite ; et
- une pluralité de moyens de prélèvement (121) de liquide associés auxdits moyens de perturbation de l'écoulement.

**16.** Dispositif selon la revendication 15, comportant des moyens (140) pour provoquer un mélange de ladite suspension, intercalés entre les différents moyens de perturbation de l'écoulement.

**17.** Dispositif (10) constitué par une pluralité de dispositifs élémentaires (11) selon l'une des revendications 1 à 14 reliés en série, de telle manière que le liquide extrait par l'un desdits dispositifs est injecté en entrée d'un dispositif adjacent.

**18.** Dispositif de type microfluidique selon l'une des revendications précédentes, dans lequel ladite conduite principale (100) présente des dimensions transversales comprises entre 10 μm et 10 mm.

**19.** Dispositif de type microfluidique selon l'une des revendications précédentes, présentant une géométrie de type planaire.

**20.** Procédé d'extraction d'une phase liquide d'une suspension, comportant :

- l'injection de ladite suspension (200) dans un dispositif (1) selon l'une des revendications précédentes, à un débit adapté pour provoquer, en aval de ladite ou de chaque singularité, la formation d'au moins un tourbillon de recirculation augmentant localement l'épaisseur d'une couche de ladite suspension appauvrie en phase solide; et
- le prélèvement d'une fraction de ladite suspension enrichie en liquide du fait dudit ou desdits tourbillons de recirculation.

**Patentansprüche**

**1.** Vorrichtung (1) zum Extrahieren einer flüssigen Phase einer Suspension (200), **dadurch gekennzeichnet, dass** sie folgendes umfasst:

- ein Hauptrohr (100) zum Zirkulieren der Suspension in ausreichender Länge für die Entwicklung einer Schicht der Suspension in abgereicherter Festphase;
- zumindest ein Störmittel (111, 112, 113, 114) der Strömung der Suspension, das im Hauptrohr vorgesehen und geeignet ist, damit die Bildung zumindest eines Rezirkulationsstrudels ausgelöst wird, durch den die Dicke der abgereicherten Schicht (210) örtlich erhöht wird, wobei das mindestens ein Störmittel der Strömung eine geometrische Unregelmäßigkeit bildet;
- ein Einspritzmittel (130) einer Suspension in das Hauptrohr mit einem geeigneten Durchsatz, um die Bildung zumindest eines Rezirkulationsstrudels an der Unregelmäßigkeit auszulösen; und
- zumindest ein Mittel zur Flüssigkeitsentnahme (121, 122), das in einem Bereich der Vorrichtung (211, 213, 220) angeordnet ist, in dem die Suspension durch den Rezirkulationsstrudel mit flüssiger Phase angereichert wird.

**2.** Vorrichtung nach Anspruch 1, wobei das Mittel zur Flüssigkeitsentnahme (122) so gestaltet ist, dass es einen mit flüssiger Phase angereicherten Bruchteil der Suspension in einem zentralen Bereich (211) des Strudels (210) entnimmt.

**3.** Vorrichtung nach Anspruch 1, wobei das Mittel zur Flüssigkeitsentnahme (121) so gestaltet ist, dass es einen mit flüssiger Phase angereicherten Bruchteil der Suspension außerhalb (220) des Strudels oder in einem peripheren Bereich (213) des letzteren entnimmt.

**4.** Vorrichtung nach einem der vorstehenden Ansprüche, wobei das Mittel zur Flüssigkeitsentnahme (122) so gestaltet ist, dass es den mit flüssiger Phase angereicherten Bruchteil in einer senkrecht zur Ebene des Strudels verlaufenden Richtung entnimmt.

5. Vorrichtung nach einem der vorstehenden Ansprüche 1 bis 3, wobei das Entnahmemittel (121) so gestaltet ist, dass es den mit flüssiger Phase angereicherten Bruchteil in einer in der Ebene des Strudels gelegenen Richtung entnimmt, die im Verhältnis zur Strömungsrichtung der Suspension im Hauptrohr nach hinten gerichtet ist.

6. Vorrichtung nach einem der vorstehenden Ansprüche, wobei das Störmittel der Strömung der Suspension gewählt wird unter:

   - einer plötzlichen Ausweitung (111) des Hauptrohrs;
   - einer Höhle (112), die in einer Seitenwand des Hauptrohrs geöffnet ist; und
   - einem profilfreien Hindernis (114), das in der Öffnung des Hauptrohrs platziert ist.

7. Vorrichtung nach Anspruch 6, wobei das Rohr spiralförmig ist oder einen Bogen oder eine Krümmung aufweist (102), und wobei das Störmittel der Strömung eine Höhle (112) ist, die in einer Seitenwand des Hauptrohrs geöffnet und an der Außenseite der Krümmung angeordnet ist.

8. Vorrichtung nach einem der vorstehenden Ansprüche, wobei eine Verengung (101) des Hauptrohrs vor dem Störmittel der Strömung vorgesehen ist, um die Dicke der Schicht in abgereicherter Festphase zu erhöhen.

9. Vorrichtung nach einem der vorstehenden Ansprüche, wobei das Mittel zur Flüssigkeitsentnahme ein Sekundärrohr (121, 122) für die kontinuierliche Entnahme eines mit flüssiger Phase angereicherten Bruchteils der Suspension enthält.

10. Vorrichtung nach Anspruch 9, wobei das Mittel zur Flüssigkeitsentnahme dafür geeignet ist, einen mit flüssiger Phase angereicherten Bruchteil der Suspension durch das Sekundärrohr durch Ansaugung mit Hilfe einer Mikropumpe zu entnehmen.

11. Vorrichtung nach einem der vorstehenden Ansprüche 9 oder 10, wobei am Eingang des Sekundärrohrs ein Filter (128) vorgesehen ist.

12. Vorrichtung nach einem der vorstehenden Ansprüche 1 bis 8, wobei das Mittel zur Flüssigkeitsentnahme zumindest eine hydrophile Höhle (112) für eine diskontinuierliche Entnahme eines mit flüssiger Phase angereicherten Bruchteils der Suspension enthält.

13. Vorrichtung nach einem der vorstehenden Ansprüche, wobei Mittel (124, 126) vorgesehen sind, um die Flüssigkeitsentnahme durch Steuerung zu aktivieren oder zu deaktivieren.

14. Vorrichtung nach einem der vorstehenden Ansprüche, wobei Mittel zur Flüssigkeitsentnahme (121) symmetrisch beidseitig des Hauptrohrs gestaltet sind.

15. Vorrichtung nach einem der vorstehenden Ansprüche, die folgendes umfasst:

   - eine Mehrzahl von Störmitteln (112) der Strömung der Suspension, die entlang dem Rohr angeordnet sind; und
   - eine Mehrzahl von Mitteln zur Flüssigkeitsentnahme (121), die in Verbindung mit den Störmitteln der Strömung stehen.

16. Vorrichtung nach Anspruch 15, die Mittel (140) umfasst, um eine Mischung der Suspension auszulösen, und die zwischen den einzelnen Störmitteln der Strömung vorhanden sind.

17. Vorrichtung (10) bestehend aus einer Mehrzahl von Grundvorrichtungen (11) nach einem der vorstehenden Ansprüche 1 bis 14, die in Reihe miteinander verbunden sind, so dass die von einer der Vorrichtungen extrahierte Flüssigkeit am Eingang einer anschließenden Vorrichtung eingespritzt wird.

18. Vorrichtung von der Art Mikrofluidikvorrichtung nach einem der vorstehenden Ansprüche, wobei das Hauptrohr (100) Querabmessungen von zwischen 10 $\mu$m et 10 mm aufweist.

19. Vorrichtung von der Art Mikrofluidikvorrichtung nach einem der vorstehenden Ansprüche, die eine Geometrie von der Art planare Geometrie aufweist.

20. Verfahren zur Extraktion einer flüssigen Phase einer Suspension, das folgendes umfasst:

   - das Einspritzen der Suspension (200) in eine Vorrichtung (1) nach einem der vorstehenden Ansprüche mit einem geeigneten Durchsatz, um nach der oder jeder Unregelmäßigkeit die Bildung zumindest eines Rezirkulationsstrudels auszulösen, der örtlich die Dicke einer Schicht in abgereicherter Festphase der Suspension erhöht; und
   - die Entnahme eines Bruchteils der durch den oder die Rezirkulationsstrudel mit Flüssigkeit angereicherten Suspension.

**Claims**

1. A device (1) for extracting a liquid phase from a suspension (200), the device being **characterized in that** it comprises:

   - a main duct (100) for conveying a flow of said suspension, the duct being of a length that is sufficient to enable a layer of said suspension to develop that is depleted in solid phase;
   - at least one flow disturbance means (111, 112, 113, 114) for disturbing the flow of said suspension, said means being provided in the main duct and being adapted to cause at least one recirculation vortex to form so as to increase locally the thickness of said depleted layer (210); said at least one flow disturbance means forming a geometrical singularity;
   - an injection means (130) for injecting a suspension into the main duct at a rate that is appropriate for causing at least one recirculation vortex to form at said flow singularity; and
   - liquid extraction means (121, 122) disposed in a region of the device (211, 213, 220) where said suspension is enriched in liquid phase as a result of said recirculation vortex.

2. A device according to any preceding claim, wherein said liquid extraction means (122) are arranged to extract a liquid-phase-enriched fraction of said suspension from a central region (211) of said vortex (210).

3. A device according to claim 1, wherein said liquid extraction means (121) are arranged in such a manner as to extract a liquid-phase-enriched fraction of said suspension from the outside (220) of said vortex or from a peripheral region (213) thereof.

4. A device according to any preceding claim, wherein said liquid extraction means (122) are arranged to extract said liquid-phase-enriched fraction in a direction that is perpendicular to the plane of the vortex.

5. A device according to any one of claims 1 to 3, wherein said extraction means (121) are arranged in such a manner as to extract said liquid-phase-enriched fraction in a direction lying in the plane of the vortex and directed rearwards relative to the flow direction of the suspension in the main duct.

6. A device according to any preceding claim, wherein said means for disturbing the flow of said suspension are selected from:

   • a sudden enlargement (111) of said main duct;
   • a cavity (112) opening out into a side wall of said main duct; and

   • a non-streamlined obstacle (114) placed in the lumen of said main duct.

7. A device according to claim 6, wherein said duct is in a spiral or presents a bend or curve (102), and wherein said flow disturbance means are a cavity (112) opening out into a side wall of said main duct and located on the outside of the bend.

8. A device according to any preceding claim, wherein a constriction (101) is provided in said main duct upstream from said flow disturbance means in order to increase the thickness of said solid-phase depleted layer.

9. A device according to any preceding claim, wherein said liquid extraction means comprise a secondary duct (121, 122) for continuously extracting a liquid-phase-enriched fraction of said suspension.

10. A device according to claim 9, wherein said liquid extraction means are adapted to extract a liquid-phase-enriched fraction of said suspension via said secondary duct by suction with the help of a micropump.

11. A device according to claim 9 or claim 10, wherein a filter (128) is provided at the inlet of said secondary duct.

12. A device according to any one of claims 1 to 8, wherein said liquid extraction means comprise at least one hydrophilic cavity (112) for discontinuously extracting a liquid-phase-enriched fraction of said suspension.

13. A device according to any preceding claim, wherein means (124, 126) are provided for activating and deactivating liquid extraction on command.

14. A device according to any preceding claim, wherein the liquid extraction means (121) are arranged symmetrically on either side of said main duct.

15. A device according to any preceding claim, comprising:

   • a plurality of flow disturbance means (112) for disturbing the flow of the suspension and disposed along the duct; and
   • a plurality of liquid extraction means (121) associated with said flow disturbance means.

16. A device according to claim 15, including means (140) for mixing said suspension, said means being interposed between the various flow disturbance means.

17. A device (10) constituted by a plurality of individual devices (11) according to any one of claims 1 to 14 and connected in series in such a manner that the liquid extracted by one of said devices is injected to the inlet of an adjacent device.

18. A microfluidic type device according to any preceding claim, wherein said main duct (100) presents transverse dimensions lying in the range 10 $\mu$m to 10 mm.

19. A microfluidic type device according to any preceding claim, presenting planar type geometry.

20. A method of extracting a liquid phase from a suspension, the method comprising:

    • injecting said suspension (200) into a device (1) according to any preceding claim at a rate that is suitable for causing, downstream from said or each flow singularity, at least one recirculation vortex to be formed locally increasing the thickness of a layer of said suspension that is depleted in solid phase; and
    • extracting a fraction of said suspension that is enriched in liquid as a result of said recirculation vortex (ices).

FIG.1

FIG.2

FIG.3

FIG.4

FIG.5

FIG.6

FIG.7a

FIG.7c

FIG.7b

FIG.8

FIG.9

FIG.10

FIG.11

FIG.12

FIG.13

FIG.14A

FIG.14B

FIG.14C

FIG.14D

FIG.14E

FIG.15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S. OOKAWARA ; D. STREET ; K. OGAWA.** Numerical study on development of particle concentration profiles in a curved microchannel. *Chem. Engineering Science,* 2006, vol. 61, 3714-3724
- **M. FAIVRE ; M. ABKARIAN ; K BICKRAJ ; H STONE.** Geometrical focusing of cells in a microfluidic device: an approach to separate blood plasma. *Biorheology,* 2006, vol. 43, 147-159
- **J.P. SHELBY ; D.S.W. LIM ; J.S. KUO ; D.T. CHIU.** High radial acceleration in microvortices. *Nature,* 2003, vol. 425
- **D.T. CHIU.** Cellular manipulations in microvortices. *Anal Bioanal Chem,* 2007, vol. 387, 17-20